# EUROPEAN PATENT APPLICATION

(11) **EP 2 161 078 A2**
(43) Date of publication of application: **10.03.2010**
(21) Application number: 09168718.6
(22) Date of filing: 26.08.2009
(51) Int. Cl.: B01J 35/04, C01B 3/40

(54) **Hydrocarbon reformer substrate having a graded structure for thermal control**

(30) Priority: 05.09.2008 US 231793
(71) Applicant: Delphi Technologies, Inc., Troy, Michigan 48007 (US)
(72) Inventor: Weissman, Jeffrey G., West Henrietta, NY 14586 (US); Nagy, Frank Jose, Rochester, NY 14624 (US); Hamilton, Daniel B., Grand Blanc, MI 48439 (US); Seino, Michael James, Flushing, MI 48433 (US); Ricci-Ottati, Giulio Angel, Burton, MI 48509 (US); Oakley, Charles Dale, Davison, MI 48423 (US)
(74) Representative: Denton, Michael John

(57) **Abstract**

A reformer substrate for supporting a catalyst in a hydrocarbon reformer, comprising a graded structure that is inhomogeneous either radially, longitudinally, or both. The inhomogeous graded structure components are selected and arranged to maintain the catalyst operating temperature during extended periods of catalytic inactivity. Selection is based primarily on heat capacity and/or thermal loss properties. Generally, the perimeter of the substrate, radially and/or longitudinally comprises a thick wall of high thermal mass materials to reduce conductive and radiated heat loss, and a high thermal capacity material within the substrate to reduce radiated heat loss. Preferred materials are open-cell rigid foams such as zirconia-toughened alumina reticulated foam, for negative thermal loads in endothermic reaction regimes, and zirconia-mullite honeycomb monolith, for positive or neutral thermal loads in exothermic or autothermic reaction regimes.

## Description

### TECHNICAL FIELD

The present invention relates to catalytic hydrocarbon reformers for producing hydrogen-rich reformate for use, for example, in regeneration of NOx traps in internal combustion engine exhaust systems; and more particularly, to such a reformer wherein the catalytic substrate is structurally graded radially and/or longitudinally to provide improved heat management when compared to a prior art non-graded substrate.

### BACKGROUND OF THE INVENTION

It is known in the art of internal combustion engines, and especially compression-ignited (Cl) engines such as diesel engines, to trap oxides of nitrogen (NOx) in specially constructed adsorption traps disposed in the engine exhaust stream to reduce unwanted tailpipe emissions of NOx. See, for example, US Patent Application Publication No. 2007/0068143, published March 29, 2007. Such NOx traps have limited capacity and therefore must be periodically renewed during engine operation, typically by reduction of NOx to elemental nitrogen (N₂). One approach is to include a catalytic hydrocarbon reformer in the exhaust system ahead of the NOx trap, to periodically operate the reformer on diesel fuel to generate hydrogen, and to pass hydrogen through the trap to reduce the accumulated NOx and thereby regenerate the trap.

Catalytic hydrocarbon reformers are well known in the art for manufacturing reformate rich in hydrogen and carbon monoxide as fuel for fuel cells such as solid oxide fuel cells. In such applications, a slave reformer typically operates in a steady-state condition during the entire operating period of the master fuel cell. Thus, such reformers are optimized for rapid startup from a cold state, and for continuous operation in a thermal steady state, either exothermic, endothermic, or a combination of both. In such reformers, the catalytic substrate typically is substantially uniform in structure, both radially and longitudinally, and heat budgets are managed by the configuration of air and reformate flow passages and heat exchangers in the reformer housing.

In NOx-trap regeneration use, the operating requirements for a reformer are substantially different. The reformer is asked to operate over relatively short bursts of time spaced relatively far apart. Further, when reformate is demanded, the reformer ideally is able to respond almost instantaneously. It has been found that fuel-cell reformers are not especially good for this purpose, in that the catalytic substrate typically cools quite rapidly after shutdown of reforming due to conductive and radiative losses, and likewise requires a significant rewarming period before beginning reformate generation again.

Current steady-state reformer substrates typically have a uniform cell density and wall thickness, for open-cell foam substrates, or a uniform pore-per-inch and uniform material density, for columnar honeycomb substrates. See, for example, US Patent Application Publication No. US 2005/0132650, published June 23, 2005.

What is needed in the art is an improved arrangement in the structure of a reforming substrate to manage the heat budget requirements of an intermittently-operating NOx trap-regenerating catalytic hydrocarbon reformer.

What is further needed are criteria for selection of materials for forming such a reforming substrate.

It is a principal object of the present invention to improve the operation of a NOx trap-regenerating catalytic hydrocarbon reformer.

### SUMMARY OF THE INVENTION

Briefly described, a reformer substrate in accordance with the present invention comprises a graded structure that is inhomogeneous radially, longitudinally, or both. The inhomogeous graded structure components are selected and arranged to maintain the catalyst operating temperature during extended periods of catalytic inactivity. Selection is based primarily on heat capacity and/or thermal loss properties. Generally, the perimeter of the substrate, radially and/or longitudinally, comprises a thick wall of high thermal mass materials to reduce conductive and radiated heat loss, and a high thermal capacity material within the substrate to reduce radiated heat loss. Preferred materials are open-cell foams such as zirconia-toughened alumina reticulated foam, for negative thermal loads in endothermic reaction regimes, and zirconia-mullite honeycomb monolith, for positive or neutral thermal loads in exothermic or autothermic reaction regimes.

### BRIEF DESCRIPTION OF THE DRAWINGS

The present invention will now be described, by way of example, with reference to the accompanying drawings, in which:
FIG. 1 is an isometric view of a prior art cylindrical honeycomb monolith for a hydrocarbon reformer substrate;
FIG. 2 is an isometric view of a prior art cylindrical reticulated open-foam monolith for a hydrocarbon reformer substrate;
FIGS. 3A and 3B are frontal and longitudinal cross-sectional views, respectively, of a first embodiment of a substrate in accordance with the present invention;
FIGS. 4A and 4B are frontal and longitudinal cross-sectional views, respectively, of a second embodiment of a substrate in accordance with the present invention;
FIGS. 5A and 5B are frontal and longitudinal cross-sectional views, respectively, of a third embodiment of a substrate in accordance with the present invention;
FIGS. 6 and 7 are curves showing mole fractions of hydrogen and methane, respectively, in reformate as a function of catalyst back face temperature during positive (exothermic) thermal load conditions, showing the importance of maintaining reforming temperature within the catalyst; and
FIGS. 8 and 9 are curves showing mole fractions of hydrogen and methane, respectively, in reformate as a function of catalyst back face temperature during negative (endothermic) thermal load conditions, again showing the importance of maintaining reforming temperature within the catalyst.

Corresponding reference characters indicate corresponding parts throughout the several views. The exemplifications set out herein illustrate currently preferred embodiments of the invention, and such exemplifications are not to be construed as limiting the scope of the invention in any manner.

### DESCRIPTION OF THE PREFERRED EMBODIMENTS

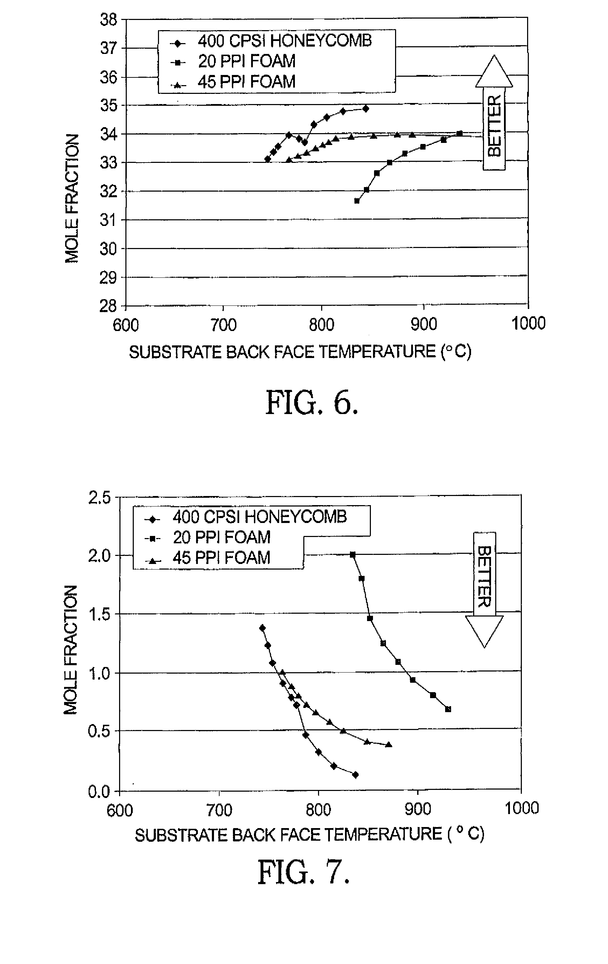

Several morphologies are currently used for a substrate supporting a reforming catalyst in fuel reforming processes and also in other catalyst applications. Substrates are used as carriers for catalyst-bearing washcoats, which consist of catalytically active metals dispersed on supports. The substrates serve as washcoat carriers; as means to provide contact between a flowing reactant stream and the washcoat; as means to transport heat via conductive mechanisms through different portions of the substrate; as means to transport reactants and products in and out of the reactor; and other functions. Provided that the substrate is composed of material durable to the intended use, substrates can be in several forms - pellets, powders, foils, foams, or monoliths. Typically, substrate monoliths are in the form of honeycombs or rigid reticulated foams. A honeycomb monolith consists of regular, parallel, open channels or cells running the length of the substrate, while a rigid reticulated foam monolith consists of frozen bubbles forming a random three-dimensional array of struts and interconnected passages, much like a typical sponge. Both substrates can be characterized by relative density and number of passages (cells) per unit area, which are important variables in the present invention. Due to the differing characteristics of foam and honeycomb cell monoliths, one over the other can be preferred depending on the needs of the reaction they are employed in - in particular, the thermal load on the reaction, as discussed below in respect of FIGS. 6-9.

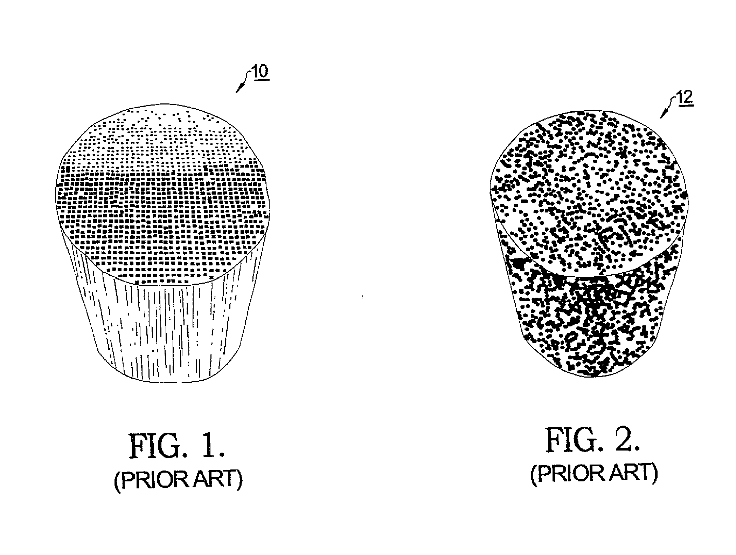

Referring to FIGS. 1 and 2, a typical prior art honeycomb cell monolith 10 is shown in FIG. 1, and a typical prior art reticulated open cell foam monolith 12 is shown in FIG. 2.

Fuel reforming technology is being pursued in the automotive industry to improve diesel NOx emission reduction and gasoline cold start HC emissions improvements. For partial oxidation fuel reforming, the fuel and air mixture is partially oxidized across an activated catalyst. The catalyst activity and operating temperature is a function of the substrate geometry, its thermal properties and catalyst formulation. As noted above, the diesel fuel reformer's current operating cycle (Diesel NOx Trap Regeneration) requires a fast start reformer, with short reformate pulses and long off-cycles between regenerations. Prior art reformers typically use reticulated Zirconia Toughened Alumina (ZTA) foam substrate with a uniform number of pores per linear inch and relative density or a honeycomb monolithic substrate (uniform number of cells per square inch). The challenge with either substrate design is to quickly raise the temperature of the catalyst assembly (washcoat and substrate) to its activation temperature and then maintain the catalyst at a temperature sufficient to complete the desired partial oxidation reactions when NOx Trap regenerations are required.

Low thermal mass substrates have been developed to enable fast start of reformers by being capable of rapid response to applied heat. However, with longer soak periods between reformate commands, the low thermal mass catalyst also cools off rapidly below its thermal activation window. This requires other operating and restart schemes (burns, air pulsing, etc), or additional reformer hardware changes to operate correctly. The present invention obviates this by structural changes to the substrate, either geometric changes and/or changing material properties that will increase the heat capacity of the catalyst assembly enabling longer off-periods between reforming pulses without deteriorating its function, or requiring other operating or restart schemes. A balance must also be struck between reduction of cooling off and lengthening of startup times.

Depending upon the thermal load, and not just the energy change of the reaction, either foam or honeycomb monoliths are preferred when operating in laminar flow conditions. This finding is summarized in the following table:

| thermal load | reaction regime | preferred monolith |
|---|---|---|
| positive | exothermic | honeycomb |
| neutral | autothermal | honeycomb |
| negative | endothermic | foam |

Thermal load is positive if heat flows out of the substrate. Honeycombs provided excellent reactant/washcoat contacting, but poor heat transport characteristics; in comparison, foams provide less effective reactant contacting but improved heat transport characteristics.

Laminar flow is characterized by the dimensionless Reynolds number, evaluated at substrate exit conditions, being the product of density, velocity, and diameter divided by the viscosity. A value of less than 2000 is considered to be laminar flow.

At positive to neutral thermal loads, heat generated by the reaction is sufficient to maintain the reaction at high conversions, so a monolith substrate with better reactant contacting is preferred. For endothermic reactions, heat must be transferred into the substrate, either from an external source or from hot reactants from the front to the down-flow portions of the monolith. In this case, a reticulated foam monolith is preferred, since the effects of improved heat transport more than overcomes the less efficient contacting nature of the foam as compared to a honeycomb.

Typical reticulated foam monoliths can be from 5 to 80 pores-per-inch (ppi), have a relative density from 5 to 50 wt. %, and can comprise alumina, silica, zirconia, silicon carbide, cordierite, mullite, or cermets such as one of any Fe-Cr-Al-Y-O alloys ('FeCrAlloy'), or mixtures of these. A monolith of a FeCrAlloy alloy, in this case, may be referred to as a stainless steel substrate used with a self grown aluminum or a protective oxide that has a ceramic-like refractory properties. Zirconia-alumina or alumina-silicon carbide as a monolith material have been found especially useful, at about 7-15% relative density, and from about 20ppi to about 45ppi.

Typical honeycomb monoliths can be from about 100 to 600 cells-per-square-inch (cpsi), have square, triangular, or hexagonal cell shapes, have from 50 to 85 % open frontal area, and cell wall thickness from 0.5 to 10 mils. Walls can be porous or non-porous, smooth or rough, having particle sizes from 0.1 to 100 microns, and if porous, with porosity from 0 to 85 %, with average pore diameters from about 0.1 to about 100 microns. Suitable compositions include alumina, silica, zirconia, silicon carbide, cordierite, mullite, compositions containing Si-Al-Ba-Sr-Ca-Fe-O, especially those with a feldspar or feldspathoid structure, compositions containing Ca-Al-Ti-O, compositions containing Ca-Al-O, or cermets such as one of any Fe-Cr-Al-Y-O alloys ('FeCrAlloy'), or mixtures of these. For example, zirconia-mullite, alumina, feldspar Ca-Al-Ti-O alumina, and FeCrAlloy cermets, and having 400 cpsi and 3-5 mil wall thickness, have been found to be particularly useful.

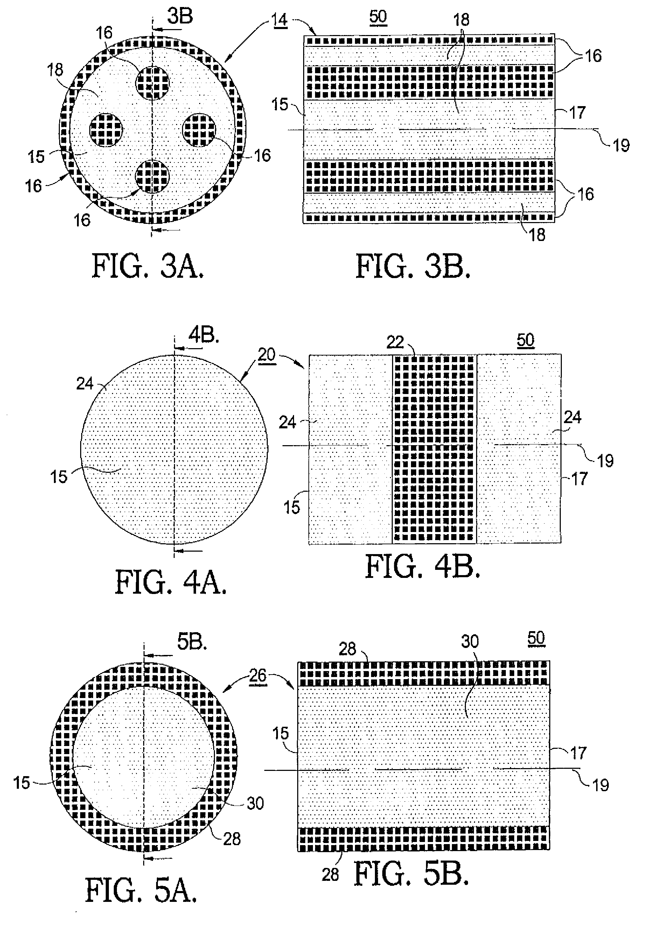

FIGS. 3A and 3A show a first embodiment 14 of a structurally graded honeycomb monolithic substrate in accordance with the present invention for use in a hydrocarbon catalytic reformer 50, the substrate having a reactants entrance end 15, and a reformate exit end 17. Reactants/reformate flow, generally, through the substrate in a direction, from the entrance end to the exit end, along the substrate's longitudinal axis 19. Regions 16 have relatively thick cell walls which have higher thermal mass, and region 18 has relatively thin cell walls which have lower thermal mass. Thermal mass is defined herein as the mass of material available for heat storage. All walls in both regions are covered in catalytic washcoat such that catalysis proceeds in both types of regions. Because the honeycomb structure is extruded and therefore is uniform longitudinally, the structurally graded variations in wall thickness are located radially to reduce the catalyst's heat loss. The honeycomb structure can be formed in a single operation, employing an appropriate extrusion die for forming the desired cell wall thicknesses in the desired regions. Obviously, many other arrangements of high and low wall thicknesses are possible within the scope of the present invention. The location of low- and high-thermal mass material is based on managing the radiated and conductive heat losses for the catalyst during operation in a specific application.

FIGS. 4A and 4B show a second embodiment 20 of a structurally graded substrate in accordance with the present invention. Substrate 20 is substantially uniform in the radial direction but is structurally graded in the longitudinal direction. Region 22 has relatively thick structural walls which have higher thermal mass, and regions 24 have relatively thin structural walls which have lower thermal mass. All walls in both regions are covered in catalytic washcoat such that catalysis proceeds in both types of regions. Regions 22 and 24 may be formed of either honeycomb or foam structures, in any combination. Obviously, many other arrangements of stacking of high and low wall thickness regions are possible within the scope of the present invention. However, it is desirable that the first (entry) and last (exit) regions are of low wall thickness and therefore are good insulators of the heat retained centrally by the high wall thickness region. Again, the location of low- and high-thermal mass material is based on managing the radiated and conductive heat losses for the catalyst during operation in a specific application.

FIGS. 5A and 5B show a third embodiment 26 of a structurally graded substrate in accordance with the present invention. Substrate 26 is substantially uniform in the longitudinal direction but is structurally graded in the radial direction, somewhat similar to first embodiment 14. Region 28 has relatively thick structural walls which have higher thermal mass, and region 30 has relatively thin structural walls which have lower thermal mass. All walls in both regions are covered in catalytic washcoat such that catalysis proceeds in both types of regions. Regions 28 and 30 are formed of reticulated foam structures. Region 28 is formed as a hollow cylinder, and region 30 is formed as a rod and inserted into region 28. Again, the radial thickness of low- and high-thermal mass material is based on managing the radiated and conductive heat losses for the catalyst during operation in a specific application.

The following examples illustrate the performance of various honeycomb and reticulated foam monoliths under various conditions, both exothermic and endothermic. These data are useful in designing a catalytic substrate 14, 20, 26 for a particular reforming application.

Referring to FIGS. 6 and 7, this reaction is exothermic and so operates in a positive thermal load regime. A mixture of methane and air, at an O/C ratio of 1.30, and a total space velocity of about 97,000/hr, measured at inlet flow rates adjusted to 0 °C and 1 atm. pressure, was flowed through 1" diameter by 1" long 400 cells-per-square-inch (cpsi) honeycomb monolith, 45 cells-per-linear-inch (cpi) reticulated foam monolith, or 20 cpi reticulated foam monolith. All three substrates were loaded to 120 grams per cubic foot of rhodium, based on part volume, carried on an alumina-based washcoat having a rhodium density of 2 wt.%. The desired reaction is partial oxidation of the methane to hydrogen, and performance is measured by the ability of the catalyst to form hydrogen and to consume methane. Reynolds numbers, calculated at substrate back-face temperatures, are about 30, placing this configuration in a well-defined laminar flow regime. In this application, the honeycomb monolith is superior to either of the reticulated foams for all temperatures investigated.

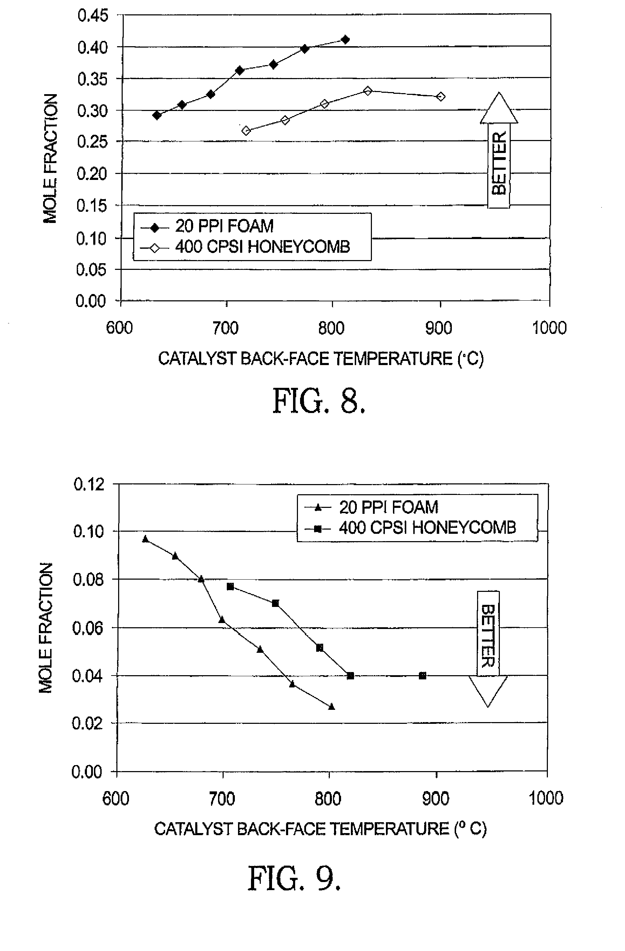

Referring to FIGS. 8 and 9, this reaction is endothermic and so operates in a negative thermal load regime. A combination of methane, air and mixed gas, at a total O/C ratio of 1.30, and a total space velocity of about 21,600/hr, measured at inlet flow rates adjusted to 0 °C and 1 atm. pressure, was flowed through 1" diameter by 1" long 400 cells-per-square-inch (cpsi) honeycomb monolith or 20 cpi reticulated foam monolith. The mixed gas has a composition of 32.8 % H₂, 44.7 % N₂, 16.9 % CO, 1.6 % CO₂, and 4.0 % H₂O, with O from water being 26.9% of the total O inlet flow, on an atomic O mole basis. Both substrates were loaded to 120 grams per cubic foot of rhodium, based on part volume, carried on an alumina-based washcoat having a rhodium density of 2 wt. %. The desired reaction is conversion of the methane to hydrogen, performance is measured by the ability of the catalyst to form hydrogen and to consume methane. Reynolds numbers, calculated at substrate back-face temperatures, are about 5, placing this configuration in a well-defined laminar flow regime. In this application, the reticulated foam monolith is superior to the honeycomb monolith for all temperatures investigated.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A porous substrate for supporting a catalyst in a hydrocarbon reformer comprising a first region having a first cell wall thickness and a second region having a second cell wall thickness greater than said first wall thickness.

2. A porous substrate in accordance with Claim 1 wherein said substrate includes a flow axis and said first and second regions are either arranged radially from the axis with respect to one another; or arranged longitudinally along the axis with respect to one another; or arranged both radially from the axis and longitudinally along the axis with respect to one another.

3. A porous substrate in accordance with Claim 1 or Claim 2 wherein one of said first and second regions comprises a reticulated foam.

4. A porous substrate in accordance with Claim 3 wherein said reticulated foam is formed of materials selected from the group consisting of alumina, silica, zirconia, silicon carbide, cordierite, mullite, cermets of any Fe-Cr-Al-Y-O alloy, and combinations thereof.

5. A porous substrate in accordance with Claim 4 wherein said reticulated foam comprises zirconia-alumina or alumina-silicon carbide.

6. A porous substrate in accordance with any one of Claims 3 to 5 wherein said reticulated foam has between about 5 pores per inch and about 80 pores per inch and has a relative density from about 5 weight percent to about 50 weight percent.

7. A porous substrate in accordance with Claim 1 or Claim 2 wherein one of said first and second regions comprises a honeycomb monolith.

8. A porous substrate in accordance with Claim 7 wherein said honeycomb monolith is formed of materials selected from the group consisting of alumina, silica, zirconia, silicon carbide, cordierite, mullite, compositions containing Si-Al-Ba-Sr-Ca-Fe-O, compositions with a feldspar or feldspathoid structure, compositions containing Ca-Al-Ti-O, compositions containing Ca-Al-O, cermets such as one of any Fe-Cr-Al-Y-O alloy, and combinations thereof.

9. A porous substrate in accordance with Claim 7 or Claim 8 wherein said honeycomb monolith has between about 100 cells per square inch and about 600 cells per square inch.

10. A porous substrate in accordance with any one of Claims 7 to 9 wherein said honeycomb monolith comprises shapes selected from the group consisting of square, triangular, hexagonal, and combinations thereof.

11. A porous substrate in accordance with any one of Claims 7 to 10 wherein said honeycomb monolith comprises a frontal surface having an open area between about 50% and about 85% of said frontal area.

12. A porous substrate in accordance with Claim 7 or Claim 8 wherein said honeycomb monolith has a cell wall thickness between about 0.0005 inch and about 0.010 inch.

13. A porous substrate in accordance with Claim 12 wherein said honeycomb monolith has a cell density of about 400 cells per square inch and a wall thickness of about 0.004 inch.

14. A porous substrate in accordance with any one of Claims 7 to 13 wherein said honeycomb monolith has a porosity between about 0% and about 85%.

15. A porous substrate in accordance with any one of Claims 7 to 14 wherein said honeycomb monolith has an average pore diameter between about 0.1 micrometers and about 100 micrometers.
